# EUROPÄISCHE PATENTSCHRIFT

(11) **EP 3 282 246 B1**
(45) Veröffentlichungstag und Bekanntmachung des Hinweises auf die Patenterteilung: **13.03.2024**
(21) Anmeldenummer: 17185896.2
(22) Anmeldetag: 11.08.2017
(51) Int. Cl.: C05F 3/00, C05F 3/06, G01N 21/85

(54) **VORRICHTUNG ZUR NÄHRSTOFFBESTIMMUNG IN FLÜSSIGMISTBEHÄLTERN UND LAGERSTÄTTEN**
DEVICE FOR NUTRIENT TESTING IN LIQUID MANURE CONTAINERS AND STORAGE FACILITIES
DISPOSITIF DE DÉTECTION D'ÉLÉMENT FERTILISANT DANS LES RÉSERVOIRS DE LISIER LIQUIDE ET LES GISEMENTS

(30) Priorität: 11.08.2016 DE 102016114932
(43) Veröffentlichungstag der Anmeldung: 14.02.2018
(73) Patentinhaber: Hugo Vogelsang Maschinenbau GmbH, 49632 Essen (DE)
(72) Erfinder: Hüdepohl, Nadja, 49624 Bunnen / Löningen (DE); Krampe, Paul, 49632 Essen / Oldbenburg (DE)
(74) Vertreter: Eisenführ Speiser

(56) Entgegenhaltungen:
- EP-A2- 1 669 737
- EP-A2- 2 530 461
- WO-A1-2015/155353
- DD-A1- 273 898
- DE-T5-112006 001 601
- US-A- 5 552 319

## Beschreibung

Die Erfindung betrifft eine Analysevorrichtung zur Bestimmung von Eigenschaften von Biomasse in einem Biomassetank. Ferner betrifft die Erfindung die Verwendung einer solchen Analysevorrichtung sowie ein Verfahren zur Bestimmung von Eigenschaften von Biomasse in einem Biomassetank.

Biomasse umfasst vorliegend insbesondere biogene Materialien, wie vergärbare, biomassehaltige Reststoffe wie Klärschlamm, Bioabfall oder Speisereste, Gülle, Flüssigmist, Pflanzenreste und -teile sowie Energiepflanzen und nachwachsende Rohstoffe. Insbesondere Gülle und Flüssigmist werden in der Landwirtschaft als Dünger verwendet.

Für Dünger gilt, dass ein bedarfsgerechter und somit ökonomischer und ordnungsgemä-βer Einsatz nur dann möglich ist, wenn einerseits der Nährstoffbedarf der Kultur und andererseits insbesondere der Nährstoffgehalt des jeweiligen Düngers, exakt bekannt sind. Eine entsprechende Kenntnis der jeweiligen Nährstoffkonzentration und der damit verbundene gezielte Einsatz, wird bei Wirtschaftsdüngern durch größere Schwankungsbreiten hinsichtlich enthaltener Nährstoffgehalte, erschwert. Nährstoffkonzentrationen sind im Einzelfall multifaktoriell durch Tierart, Fütterung, Haltungsverfahren, Lagerung, Jahreszeit und besonders durch die Bewirtschaftungsintensität bestimmt.

Für eine exakte Rückführung in den Boden, vor allem im Sinne einer bilanzierten Düngeplanung und einer wirtschaftlich gezielten und insbesondere die Allgemeinressource "Wasser" schonende Nutzung der Nährstoffe im Betriebskreislauf, ist die tatsächliche Bestimmung, Untersuchung und Interpretation von Ist-Werten des Nährstoffgehaltes von Wirtschaftsdüngern unumgänglich. Wegen seiner großen Bedeutung in der Praxis ist hierbei Flüssigmist vorrangig zu beachten.

Darüber hinaus ist die genaue Bestimmung und Dokumentation der Bilanzen in den einzelnen Betrieben nicht nur ökonomisch sondern auch ökologisch von größter Bedeutung. Denn dadurch kann es den staatlichen Stellen ermöglicht werden diese Ergebnisse zusammen zu führen und somit sowohl die flächendeckende Ausbringung in den eigenen Regionen als auch den überregionale Abtransport der Nährstoffe zu kontrollieren. Dies schafft die Grundlage der steigenden Schadstoffbelastung von Nitrat und Phosphat in Böden und Grundwässern gezielt entgegen zu steuern.

In der geübten Praxis wird der Nährstoffgehalt in den Betrieben oftmals anhand von Tabellenwerten beurteilt. Durch die hier verwendeten Durchschnittswerte bleiben die genannten Schwankungen unberücksichtigt, was zu einer erheblichen Fehlabschätzung und Abweichung des geschätzten vom tatsächlichen Ist-Wert führen kann. Dies wirkt sich einerseits auf die düngungswirksamen Anfallsmengen ("Frachten"), aber auch gleichzeitig auf die resultierenden Emissionen - welche für die Beeinflussung der Umweltressourcen Wasser, Luft und Boden von Relevanz sind - direkt aus. Eine solche Bewertung kann dementsprechend eine ökonomisch und ökologisch zielgerichtete Verteilung der Güllenährstoffe stark beeinträchtigen.

Alternativ wird aus dem Biomassetank, wie etwa dem Gülletank oder Güllekeller, eine Probe entnommen und die Nährstoffe labortechnisch analysiert. Bei einem solchen Verfahren werden dem Flüssigmistbehälter bzw. dem Gülletank repräsentative Proben entnommen, die in geeigneten Laboren anschließend auf ihren Nährstoffgehalt untersucht werden. Durch sachgerechte Ermittlung der in den Behältern angefallenen Mengen und entsprechender Hochrechnung können somit die zur Düngung verfügbaren Nährstoffmengen geeignet bestimmt werden. Für die Nährstoffanalytik stehen bekannte Methoden bereit, zum Beispiel bekannt im VDLUFA Methodenbuch. Weiterhin sind in BOHNENKEMPER, O., UND STEFFENS, G., (2006): GÜLLE - MENGEN GENAU ERMITTELN, PROBEN RICHTIG ZIEHEN. KTBL-HEFT 61, DARMSTADT: KURATORIUM FÜR TECHNIK UND BAUWESEN IN DER LANDWIRTSCHAFT E. V.

Methoden zum Ziehen von Proben, wie etwa Arten von Entnahmegeräten wie z.B. Stechlanzen, Entnahmeorte in einem Tank sowie bevorzugte Entnahmemengen offenbart.

Die Probenentnahme erfolgt üblicherweise mit einer Stechlanze, Probenboxen, die an Stangen befestigt sind, oder Probenflaschen, die mittels Seilen in den Tank hinab gelassen werden. Das sorgfältige Probenziehen und deren Zusammenführung ist hier von entscheidender Bedeutung für die Probenqualität, Repräsentativität und damit der Aussagekraft der Nährstoffanalyseergebnisse im Hinblick auf die tatsächlich vorhandenen Nährstoffmengen der untersuchten Biomasse.

In Biomassetanks bilden sich stets Schwimm- und Sinkschichten, die sich in ihrer Trockensubstanz und Nährstoffgehalt zum Teil erheblich unterscheiden. Dies erschwert die Probennahme deutlich, da zur Minimierung der systematischen sowie auch zufälligen Probennahmefehler mehrere Proben aus verschiedenen Höhen und Entnahmestellen gezogen werden müssen. Mit vielen der gängigen Entnahmegeräte, wie die oben erwähnten Stechlanzen und Probenboxen oder auch Probenflaschen, sind für jede dieser Proben einzelne Entnahmedurchgänge und entsprechende Stichproben notwendig, die wiederum abgefüllt oder in Zwischenbehälter zusammengeführt werden müssen. Je nach Lagerungsbedingungen und Entnahmemethode ist häufig ein zusätzliches Homogenisieren des Biomassetanks mit einem Rührwerk erforderlich.

Damit steht der Genauigkeit der Nährstoffbestimmung mittels Stichproben nicht nur ein größerer Kostenfaktor für die Anzahl der im Labor zu analysierenden Proben, sondern auch ein erheblicher Mehraufwand und ein gesteigertes Risiko bei der Probennahme und Transport entgegen.

Daher ist es Aufgabe der vorliegenden Erfindung, eine Analysevorrichtung, die Verwendung einer Analysevorrichtung sowie deren Verfahren der eingangs genannten Art anzugeben, die sowohl die aufwändige Probennahme als auch die kostenintensive Laboranalyse ersetzen und gleichzeitig den Betrieben, aber auch den staatlichen Stellen, zuverlässige Nährstoffwerte liefern. Damit soll die sachgerechte Einschätzung der Nährstoffgehalte im Hinblick auf gezielte Düngungsmaßnahmen (lokal im Betrieb) und abzugebender Güllemengen (überregionaler Transport und Austausch) im Falle von Nährstoffüberschüssen oder Schadstoffbelastungen gewährleistet werden.

DE 11 2006 001 601 T5 offenbart eine Sonde zum Einbringen in ein Fluid und zum Erzeugen eines Ausgangs, der repräsentativ für einen mit dem Fluid zusammenhängenden Parameter ist. Die Sonde umfasst ein Tauchgehäuse, einen Sensor, der von dem Tauchgehäuse getragen wird, um den Parameter zu messen und ein Sensorsignal zu erzeugen, das repräsentativ für den Parameter ist, ein Dichte-Steuerungssystem, das von dem Tauchgehäuse getragen wird, um eine Dichte der Sonde zu ändern, eine Datenverarbeitungseinrichtung, die mit dem Sensor kommuniziert, um einen Ausgang als eine Funktion des Sensorsignals zu erzeugen, eine Ausgabeschaltung, die mit der Datenverarbeitungseinrichtung kommuniziert und eine flexible Übertragungsleitung, die ein erstes Ende und ein zweites Ende hat, wobei das erste Ende mit dem Tauchgehäuse verbunden ist und mit der Ausgabeschaltung kommuniziert und das zweite Ende zur Verbindung mit einem Fern-Prozesssystem dient.

Aus DD 273 898 A1 sind ein Verfahren und eine Anordnung zur sofortigen Ermittlung des Gehaltes an Inhaltsstoffen, insbesondere an Trockensubstanz und Nährstoffen von Gülle in Behältern, Rohrleitungen und Kanälen bekannt. Die Leitfähigkeit wird mit einer Elektroden-Anordnung in einem Rohrabschnitt aus elektrisch nicht leitendem Material mit Hilfe einer konstanten Wechselspannung und Messen des Spannungsabfalls, Stromflusses oder Widerstandes bestimmt und die erhaltenen Messwerte mit Messwerten einer Verdünnungsreihe aus anlagentypischer Gülle und anlagentypischem Brauchwasser verglichen.

Ferner offenbart EP 2 530 461 A2 ein Verfahren und eine Vorrichtung zur Wartung, Reinigung, Kalibrierung und Verlängerung der Lebensdauer von Sonden bei einer kontinuierlichen, elektroanalytischen Messanlage für chemische und physikalische Parameter zur laufenden Ermittlung der Qualität sowie der Anfallsmenge von Gülle aus der Tierhaltung, ohne dass eine Demontage der Messelektroden erforderlich ist. Der Kontakt der Messelektrode zur umgebenden Flüssigkeit wird kurz- oder mittelfristig unterbrochen und eine Spülung mit wässrigen Flüssigkeiten zur Reinigung und Aufbewahrung in Messpausen sowie eine Kalibrierung mit Eichlösungen zur Kontrolle und Eichung von außerhalb wird möglich.

EP 1 669 737 A2 beschreibt ein Verfahren zur Schnellanalytik von pastösen und flüssigen eutrophen Stoffen. Hierzu wird zunächst eine Probe des Stoffes in ein mit einer Trägersubstanz vorgefülltes Behältnis gefüllt, welches anschließend in ein Labor übersandt wird. Von der Probe wird das Bruttogewicht bestimmt, eine definierte Mischung aus Trägermaterial und Stoff aus dem Behältnis zur Bestimmung der Trockensubstanz entnommen und die Restmenge getrocknet. Schließlich wird der der quantitative Gehalt an organisch gebundenem Stickstoff, an Ammonium-Stickstoff, an Gesamtkohlenstoff, an organischen Säuren sowie an chemischem Sauerstoffbedarf, an organischer und anorganischer Substanz und an Faserstoffen aus den gemessenen Absorptionswerten einer Einzelprobe durch statistischen Vergleich verschiedener Absorptionsbanden bei bestimmten Wellenlängen mit den spektralen Messergebnissen einer Gruppe von Proben ähnlicher chemischer Zusammensetzung mittels bekannter multivariater Berechnungsmethoden ermittelt.

Aus WO 2015/155353 A1 ist ein Verfahren zur Steuerung eines enzymatischen Vorbehandlungsprozesses, z. B. eines Maischprozesses bekannt. Das Verfahren ermöglicht die genaue Bestimmung spezifischer Zuckermoleküle sowie der durchschnittlichen Länge der Zuckerketten in Echtzeit. Gleichzeitig können weitere Informationen, z. B. über die Konzentration von gelöstem Protein und freien Aminosäuren, gewonnen werden. Die Methode umfasst die Verwendung eines Infrarot (IR)-Spektometers zur kontinuierlichen Messung der IR-Spektren mit abgeschwächter Totalreflexion (ATR) von Proben, die während der Vorbehandlung der Biomasse gewonnen wurden.

US 5 552 319 A offenbart eine Vorrichtung und ein Verfahren zum Überwachen und Kontrollieren der biologischen Aktivität von Abwasser durch Messen der Veränderungen des Gehalts an gelöstem Sauerstoff im Abwasser. Die Vorrichtung umfasst eine Kammer mit einer Öffnung zum Aufnehmen einer Probe des Abwassers, die in einem Bioreaktortank angeordnet ist, sowie eine Probeentnahmeeinheit, die dazu geeignet ist, die Veränderungen des Gehalts an gelöstem Sauerstoff in der Probe des Abwassers zu erfassen.

In einem ersten Aspekt löst die Erfindung die Aufgabe bei einer Analysevorrichtung gemäß Anspruch 1.

Die Erfindung basiert auf der Idee, dass es durch die erfindungsgemäße Analysevorrichtung nicht mehr erforderlich ist, mittels einer Probenflasche oder dergleichen eine Probe aus dem Tank zu entnehmen und diese extern in einem Labor untersuchen zu lassen. Zwar sind auch mobile Labore bekannt, dennoch ist der Aufwand erheblich, insbesondere aufgrund der Positionierung der herkömmlichen Entnahmevorrichtungen, wie Tauchflaschen, und die Proben müssen separat abgefüllt oder vermischt werden. Daher liegt der Erfindung die Erkenntnis zugrunde, dass eine erhebliche Vereinfachung dadurch erreicht werden kann, dass die Sensoreinheit an den Ort gebracht wird, an dem die Daten erfasst werden sollen, nämlich in die Biomasse eingetaucht wird. Um dies zu erreichen, schlägt die vorliegende Erfindung eine Tauch-Sensoreinheit vor, die zur Erfassung von Daten der Biomasse vorgesehen ist und in die Biomasse eingetaucht wird. Die Tauch-Sensoreinheit ist dazu mit einem Gehäuse fluiddicht eingehaust, um die Sensoreinheit vor Eindringen von flüssiger Biomasse zu schützen. Die Einhausung ist jedenfalls so gestaltet, dass die Sensoreinheit nicht mit Biomasse in Kontakt kommt. Ferner weist die Analysevorrichtung eine Positioniereinrichtung auf, mittels derer die Tauch-Sensoreinheit sowohl in vertikaler als auch in lateraler Position innerhalb des Biomassetanks positioniert werden kann und so an einen Sensorort, an dem die Daten erfasst werden sollen, verbringbar ist. Insbesondere aufgrund der Schwimm- und Sinkschichten bildet sich in Biomassetanks ein erhebliches vertikales Gefälle der Nährstoffgehalte aus, sodass die Erfassung von Daten der Biomasse in verschiedenen Höhen erforderlich ist. Ferner existieren in Randbereichen des Biomassetanks häufig Bereiche mit einem höheren Trockensubstanzgehalt, da dort Rührwerke nur unzureichend angreifen können. Daher ist auch eine Erfassung von Daten der Biomasse in verschiedenen lateralen, insbesondere horizontalen, Positionen vorteilhaft.

Die Einrichtung zur Bestimmung der Tauchtiefe der Tauch-Sensoreinheit dient dazu festzustellen, in welcher Höhe in dem Biomassetank die Daten erfasst werden. Wie bereits erwähnt, bilden sich in Biomassetanks eine Mehrzahl an Schichten aus, die verschiedene Zusammensetzungen beinhalten. Daher ist die Erfassung von Daten in verschiedenen Höhen erforderlich und daher ist es vorteilhaft, die Tauchtiefe der Tauch-Sensoreinheit zu bestimmen. Die Einrichtung zur Bestimmung der Tauchtiefe kann eine Einrichtung sein, die die Tauchtiefe automatisch und selbsttätig bestimmt oder beispielsweise einen Maßstab umfassen, sodass die Tauchtiefe ablesbar ist. Ferner ist eine Datenübertragungseinrichtung zum Übertragen der erfassten Daten zur Auswertung der Daten vorgesehen. Der Sensor erfasst Daten an dem Sensorort, also während des Tauchens innerhalb der Biomasse, und diese Daten müssen anschließend an eine externe Einrichtung, wie insbesondere einen Analyse-PC oder dergleichen übertragen werden. Ein Biomassetank im Sinne der vorliegenden Erfindung ist insbesondere ein Flüssigmist-, ein Gülletank oder ein Behälter einer Biogasanlage, in dem Biomasse zur Erzeugung von Biogas vorgehalten wird.

Gemäß der Erfindung, weist die Tauch-Sensoreinheit einen Spektroskopie-Sensor auf. Mittels eines derartigen Sensors ist ein Spektrum der Biomasse, benachbart zu der Tauch-Sensoreinheit, aufnehmbar. Der Spektroskopie-Sensor beleuchtet dazu den aufzunehmenden Bereich der Biomasse und empfängt reflektierte Strahlung, die dann in Form des Spektrums analysiert werden kann. Ein solcher Spektroskopie-Sensor kann beispielsweise als Raman-Sensor oder als optischer Computer mit einem entsprechenden optischen Element, ausgebildet sein. Besonders bevorzugt ist der Spektroskopie-Sensor aber als IR-Spektroskopie-Sensor ausgebildet, insbesondere als NIRS-Sensor oder als MIRS-Sensor, oder ist als ein NMR-Sensor ausgebildet. Infrarotspektroskopie hat sich in der Vergangenheit auch für externe Analyseeinheiten bewährt und ist ein bekannter und robuster Prozess. Insbesondere die Nahinfrarotspektroskopie (NIRS) eignet sich gut, wobei zur Datenerfassung bei Biomasse auch eine Mittelinfrarotspektroskopie (MIRS) sinnvoll ist. Ebenfalls kann eine Kernspinresonanzspektroskopie (NMR) zum Einsatz kommen, wobei dann eine entsprechende Anregestrahlung durch die Sensoreinheit erzeugt werden muss.

Es soll verstanden werden, dass hier auch verschiedene andere Sensoren, insbesondere Spektroskopie-Sensoren eingesetzt werden können und die Auswahl des geeigneten Sensors besonders von den zu erfassenden Daten abhängig ist, die wiederum davon abhängig sind, welche Analyseaufgabe mit der Analysevorrichtung ausführt werden soll. Ebenso ist es denkbar, dass die Tauch-Sensoreinheit mehrere Sensoren aufweist, um so das Einsatzspektrum weiter zu vergrößern. So kann beispielsweise zusätzlich ein Temperatursensor oder auch ein einfacher RGB-Sensor vorgesehen sein. Es ist auch denkbar, dass die Daten aus den verschiedenen Sensoren in einer Sensordatenfusion zusammengeführt werden, um so erweiterte Analysemethoden anwenden zu können.

Weiterhin ist es denkbar und bevorzugt zusätzlich oder alternativ einen elektrolytischen Sensor bzw. eine Elektrode, in der Sensoreinheit zu verwenden, oder einen oder mehrere andere bekannte zur Trockensubstanz- und/oder Nitratbestimmung bekannte und geeignete Sensoren einzusetzen.

Gemäß der Erfindung ist die Positioniereinrichtung mechanisch ausgebildet und die Tauch-Sensoreinheit mechanisch getrieben an den Sensorort verbringbar. Eine derartige mechanische Positioniereinrichtung lässt sich insbesondere manuell oder durch einen externen Motor betreiben, und die Tauch-Sensoreinheit ist mechanisch mit der Positioniereinrichtung verbunden und wird durch diese gehalten.

Eine solche Positioniereinrichtung ist beispielsweise als Führungsrohr ausgebildet, wobei die Tauch-Sensoreinheit in dem Führungsrohr angeordnet ist. Das Führungsrohr bildet in diesem Fall das Gehäuse der Tauch-Sensoreinheit und schirmt die Tauch-Sensoreinheit gegen Eindringen von Biomasse ab.

Dabei ist bevorzugt die Tauch-Sensoreinheit verfahrbar innerhalb des Führungsrohrs angeordnet. Beispielsweise ist die Tauch-Sensoreinheit mit einem Seil verbunden und innerhalb des Führungsrohr auf und ab fahrbar. Hierdurch ist es möglich, das Führungsrohr ortsfest in dem Biomassetank zu halten, während die Sensoreinheit auf verschiedene Höhen verfahren wird. Das Seil, welches die Sensoreinheit in diesem Fall antreibt, dient dann als Einrichtung zur Bestimmung der Tauchtiefe, da über die Seillänge die Tauchtiefe der Tauch-Sensoreinheit bestimmbar ist.

Weiterhin weist das Führungsrohr vorzugsweise wenigstens ein Sensorfenster für die Tauch-Sensoreinheit auf. Ist die Tauch-Sensoreinheit nicht verfahrbar, sondern ortsfest in dem Führungsrohr angeordnet, reicht ein Fenster aus. Ist die Tauch-Sensoreinheit hingegen verfahrbar angeordnet, sind vorzugsweise entsprechend der gewünschten Genauigkeit zwei oder mehr Sensorfenster, beispielsweise drei, vier, fünf, sechs, sieben, acht, oder mehr vorgesehen. Vorzugsweise ist eine Vielzahl von Sensorfenstern vorgesehen, sodass die Höhe der Datenerfassung in dem Führungsrohrfrei wählbar ist. Es kann auch vorgesehen sein, dass ein durchgängiges Fenster in dem Führungsrohr vorgesehen ist. Alternativ ist das Führungsrohr insgesamt aus einem durchsichtigen Material, wie beispielsweise einem durchsichtigen Kunststoff, beispielsweise PLEXIGLAS^{®}, gebildet, sodass unabhängig von einem bestimmten Ort der Tauch-Sensoreinheit innerhalb dem Führungsrohr Daten erfassbar sind.

In einer weiteren bevorzugten Ausführungsform weist die Positioniereinrichtung ein mechanisches Winkelgestänge auf. Ein solches mechanisches Winkelgestänge kann einerseits manuell betrieben sein und durch einen Bediener gehalten werden, andererseits kann ein derartiges mechanisches Winkelgestänge auch ein Ausleger eines Baggers oder dergleichen sein, der an einem Traktor oder dergleichen angeordnet ist. Ein solches Winkelgestänge weist vorzugsweise wenigstens einen translatorischen und einen rotatorischen Freiheitsgrad auf, sodass die Tauch-Sensoreinheit im Wesentlichen frei in dem Biomassetank positionierbar ist.

Ferner ist vorzugsweise in dieser Ausführungsform ein Maßstab auf wenigstens einem Schenkel des Winkelgestänges angeordnet, sodass die Tauchtiefe ablesbar ist. Alternativ wird die Tauchtiefe der Tauch-Sensoreinheit berechnet aus der Position des Winkelgestänges sowie von Winkeln zwischen Schenkeln des Winkelgestänges. Dies kann manuell oder automatisiert, insbesondere durch Erfassung mittels Sensoren, erfolgen.

Gemäß einer weiteren bevorzugten Ausgestaltung der Erfindung weist die Positioniereinrichtung ein mittels einer Seilwinde antreibbares Seil auf. Die Tauch-Sensoreinheit ist an dem Seil befestigt, und durch Ausspulen des Seils kann die Tauch-Sensoreinheit gravitationsgetrieben in die Biomasse eintauchen. Bevorzugt ist hierbei, dass die Seilwinde mittels einer Traverse lateral in dem Tank, vorzugsweise oberhalb des Füllstands, positionierbar ist. Die Seilwinde taucht vorzugsweise nicht in die Biomasse ein, da dies zu Verschmutzungen an der Seilwinde führt. Beispielsweise kann eine ortsfeste oder eine örtlich variable Traverse vorgesehen sein, und die Seilwinde ist auf einem Wagen angeordnet, der auf der Traverse verfährt. Die Einrichtung zur Bestimmung der Tauchtiefe ist in diesem Fall vorzugsweise so ausgeführt, dass der laterale Ort der Seilwinde auf der Traverse mittels eines Maßstabs oder eines Sensors erfassbar ist und die Tauchtiefe durch die ausgespulte Länge des Seils. Die Seillänge, die ausgespult ist, kann ebenfalls durch optische Markierungen gekennzeichnet sein, die ein Bediener vom Rand des Tanks aus erkennt, andererseits kann dies auch durch einen Sensor erfolgen, insbesondere wenn die Seilwinde einen Synchronmotor aufweist.

Gemäß einer besonders bevorzugten Ausführungsform der Erfindung weist die Positioniereinrichtung ein ferngesteuertes und/oder autonomes Fahrzeug auf. In einer ersten Variante ist das Fahrzeug ein Schwimmer, der dazu vorgesehen ist, auf der Biomasse zu schwimmen, wobei die Tauch-Sensoreinheit mittels eines Seils oder einer Teleskopstange an dem Schwimmer angeordnet ist. Ein solcher Schwimmer kann beispielsweise eine Boje sein, vorzugsweise eine Boje, die einen Antrieb aufweist, oder als Boot oder Ponton ausgebildet sein. Die Tauch-Sensoreinheit ist wiederum mittels einer Seilwinde oder einer anderen Anordnung, wie beispielsweise eine Teleskopstange, an dem Schwimmer befestigt, um so vertikal eintauchen zu können. Diese Variante hat den Vorteil, dass das Fahrzeug stets durch einen Bediener sichtbar ist und in dem schwimmenden Teil des Fahrzeugs Elektronik oder dergleichen untergebracht werden kann. Die Tauchtiefe ist hier durch das Seil oder die Teleskopstange bestimmbar und so auch erfassbar.

In einer weiteren Variante ist das Fahrzeug als Tauchboot ausgebildet, und das Tauchboot bildet ein Gehäuse für die Tauch-Sensoreinheit, die mittels des Tauchboots an den Sensorort verbringbar ist.

Sowohl Tauchboot als auch Schwimmer können ferngesteuert, teilautonom oder vollständig autonom ausgebildet sein. Ferngesteuerte Fahrzeuge bieten sich an, wenn durch einen Bediener gezielt an bestimmten Orten Daten erfasst werden sollen. Ein vollständig autonomes Fahrzeug ist besonders in dem Fall von Vorteil, wenn ein automatisierter Probenplan abgefahren werden soll. Beispielsweise ist es denkbar, dass das Tauchboot permanent in dem Biomassetank angeordnet ist und einen vorgegebenen Analyseplan abarbeitet. Hierdurch ist eine permanente Überwachung der Biomasse in dem Biomassetank möglich.

In einer bevorzugten Ausgestaltung weist die Einrichtung zur Bestimmung der Tauchtiefe der Tauch-Sensoreinheit einen Drucksensor auf. Der Drucksensor ist vorzugsweise in der Tauch-Sensoreinheit angeordnet. Mittels des Drucksensors lässt sich auf einfache Art und Weise die Tauchtiefe bestimmen, wenn eine durchschnittliche Dichte der Biomasse bekannt ist. Da bei der Analyse von Biomassetanks eine Hochpräzisionsanalyse nicht erforderlich ist, reicht die Genauigkeit hierbei aus.

In einer weiteren bevorzugten Ausführungsform weist die Datenübertragungseinrichtung eine Speichereinheit zum Zwischenspeichern der erfassten Daten auf. Die Speichereinheit ist vorzugsweise dazu vorgesehen, die Daten auf einem entfernbaren Datenträger, wie beispielsweise einer Speicherkarte oder dergleichen, zu speichern. Alternativ ist die Speichereinheit so ausgebildet, dass sie nach Abschluss des Erfassungsvorgangs ausgelesen werden kann, beispielsweise durch Anschluss der Datenübertragungseinrichtung an eine Analysestation mittels einer Kabelverbindung oder einer drahtlosen Verbindung. Es kann ebenfalls vorgesehen sein, dass die Datenübertragungseinrichtung eine Funkeinheit aufweist, sodass die erfassten Daten drahtlos übertragbar sind. Die Übertragung kann teilweise gleichzeitig oder nach Abschluss eines Erfassungsvorgangs ausgeführt werden. Beispielsweise bietet sich eine Datenübertragung mittels Bluetooth^{®}, WLAN oder dergleichen an.

Bevorzugt umfassen die erfassten Daten einen Nährstoffgehalt der Biomasse. Der Nährstoffgehalt umfasst insbesondere einen Phosphatgehalt als auch einen Nitratgehalt der Biomasse. Dies ist wichtig, wenn die Biomasse zum Düngen verwendet wird. Auch beim Export oder Import von Biomasse, gerade in nährstoffarmen Gebieten, ist es wichtig, den Nährstoffgehalt zu kennen.

Weiter ist bevorzugt, den Trockensubstanzgehalt (TS) der Biomasse zu erfassen. Der Trockensubstanzgehalt kann Aufschluss darüber geben, wie homogen die Biomasse ist, was wiederum Einfluss auf das Ausbringen der Biomasse als Düngemittel hat und andererseits in Biogasanlagen Aufschluss über eine entsprechende Verarbeitung der Biomasse und ein Rührwerk, welches zur Homogenisierung der Biomasse vorgesehen ist, geben kann.

Gemäß einem zweiten Aspekt, der außerhalb der vorliegenden Erfindung liegt, wird die eingangs genannte Aufgabe durch die Verwendung einer Analysevorrichtung nach einer der vorstehend beschriebenen bevorzugten Ausführungsformen einer Analysevorrichtung des ersten Aspekts der Erfindung, zur Analyse von Biomasse in einem Biomassetank gelöst. Es soll verstanden werden, dass der erste Aspekt der Erfindung als auch der zweite Aspekt der Erfindung gleiche und ähnliche Aspekte aufweisen, wie sie insbesondere in den Unteransprüchen niedergelegt sind. Insofern wird vollumfänglich auf die obige Beschreibung zur Analysevorrichtung gemäß dem ersten Aspekt der Erfindung verwiesen.

Weiterhin wird in einem dritten Aspekt der Erfindung die eingangs genannte Aufgabe durch ein Verfahren zur Bestimmung von Eigenschaften von Biomasse in einem Biomassetank gemäß Anspruch 10 gelöst.

Auch das Verfahren gemäß dem dritten Aspekt sowie die Analysevorrichtung gemäß dem ersten Aspekt der Erfindung weisen gleiche und ähnliche bevorzugte Unteraspekte auf, wie sie insbesondere in den abhängigen Ansprüchen niedergelegt sind. Insofern wird bezüglich Weiterentwicklungen, weiterer Merkmale sowie deren technische Effekte auf die obige Beschreibung zum ersten Aspekt der Erfindung vollumfänglich verwiesen.

In einer bevorzugten Ausführungsform des Verfahrens erfolgt das Positionieren der Tauch-Sensoreinheit in Biomasse in dem Biomassetank an dem zweiten vertikalen und lateralen Sensorort selbsttätig. Die Tauch-Sensoreinheit wird gemäß diesem Aspekt selbsttätig von dem ersten Sensorort zum zweiten Sensorort bewegt, beispielsweise wenn die Positioniereinrichtung, wie oben beschrieben, ein autonomes Fahrzeug aufweist. Es soll verstanden werden, dass selbstverständlich auch dritte, vierte, fünfte, sechste und so weiter Sensororte angefahren werden können und sollen, da es erforderlich ist, eine Mehrzahl an Messpunkten aufzunehmen. Zwei Sensororte sind ein Minimum, um einen Messplan auszuführen.

Weiterhin umfasst das Verfahren vorzugsweise den Schritt: Übertragen der erfassten Daten, teilweise oder vollständig während der Erfassung und/oder dem Positionieren oder nach Abschluss des Erfassens, an eine externe Analysestation zur Auswertung der erfassten Daten. Die Übertragung kann während des Erfassens, also während die Daten erfasst werden, erfolgen oder direkt nach Abschluss des Erfassens an einem der ersten und zweiten Sensororte. Wird die Datenübertragung jeweils nach Erfassen an einem Sensorort ausgeführt, findet eine intermittierende Übertragung statt. Es erfolgt dann zunächst ein Erfassen am ersten Sensorort, anschließend ein Übertragen der dort erfassten Daten, anschließend Positionieren am zweiten Sensorort, Erfassen der Daten am zweiten Sensorort sowie Übertragen der am zweiten Sensorort erfassten Daten. Alternativ ist auch denkbar, dass am Ende nach Abschluss der Datenerfassung an einer Vielzahl an Sensororten die erfassten Daten gesammelt übertragen werden.

Weiterhin ist bevorzugt, dass das Verfahren den Schritt umfasst: Berechnen eines approximativen Nährstoffgehalts des Biomassetanks. Sind an den ersten und zweiten Sensorpunkten Nährstoffgehalte erfasst worden, kann der Nährstoffgehalt des Biomassetanks hochgerechnet werden. Bevorzugt wird eine Mehrzahl an Sensororten angefahren, und bevorzugt werden an einer Mehrzahl an Sensororten Daten erfasst. Durch Kenntnis der verschiedenen Daten an den verschiedenen Sensororten sowie der Lage der Sensororte in dem Biomassetank ist es möglich, den Nährstoffgehalt des Biomassetanks hochzurechnen. Dies erfolgt bevorzugt computergestützt, insbesondere unter Verwendung eines Computerprogramms.

Vorzugsweise umfasst das Verfahren ferner die Schritte: Bestimmen, dass das Erfassen an einem der ersten und zweiten Sensororte mangelhafte Daten erzeugt hat; und Wiederholen des Erfassens an dem entsprechenden ersten oder zweiten Sensorort. Bevorzugt wird das Bestimmen, dass das Erfassen an einem der ersten und zweiten Sensororte mangelhafte Daten erzeugt hat, mittels der Sensoreinheit selbst ausgeübt. Die Erfassung der Daten an dem entsprechenden Sensorort kann dann wiederholt werden. Dies ist ein erheblicher Vorteil gegenüber den bekannten Analyseverfahren, bei denen mittels einer Stechlanze oder einer Tauchflasche Biomasse aus dem Biomassetank entnommen wird. Bei den herkömmlichen Verfahren muss die gesamte Probennahme wiederholt werden, während bei dem erfindungsgemäßen Verfahren nur noch der Messpunkt wiederholt werden muss, was selbsttätig durch die Analysevorrichtung geschehen kann. Hierdurch wird der Arbeitsaufwand erheblich verringert.

In einer weiteren bevorzugten Ausführungsform umfasst das Verfahren den Schritt: Bestimmen eines Trockensubstanzanteils an den ersten und zweiten Sensororten. Weiterhin umfasst das Verfahren ferner bevorzugt den Schritt: Berechnen einer Homogenität der Biomasse basierend auf den Trockensubstanzanteilen an den ersten und zweiten Sensororten. Die Homogenität hat Einfluss darauf, wie die Biomasse weiter verarbeitet werden kann, beispielsweise in Form von Düngemittel auf ein Feld ausgetragen werden kann.

Bevorzugt ist ferner der Schritt vorgesehen: Anpassen einer Rührwerksaktivität basierend auf der Homogenität der Biomasse. Wird beispielsweise festgestellt, dass die Biomasse sehr homogen ist, ist es denkbar, die Aktivität des Rührwerks zu verringern, da eine verringerte Aktivität immer noch ausreicht, um die Homogenität aufrechtzuerhalten. Hierdurch kann Elektrizität eingespart sowie Verschleiß des Rührwerks verringert werden. Wird andererseits festgestellt, dass die Homogenität nicht ausreichend ist, insbesondere unterhalb eines Homogenitätsschwellwerts liegt, kann die Rührwerksaktivität entsprechend angepasst werden. Beispielsweise kann das Rührwerk an bestimmte Orte in dem Biomassetank verfahren werden, um dort eine erhöhte Rührwerksaktivität einzubringen und die Homogenität zu steigern. Dies ist insbesondere bei Biomassetanks von Biogasanlagen bevorzugt, da diese üblicherweise permanent abgedeckt sind und sich nach gewisser Zeit zwangsläufig Sink- und Schwimmschichten bilden. Diese sind von außen nicht erkennbar, und eine Bestimmung der Homogenität wird durch das erfindungsgemäße Verfahren hier möglich.

Nachstehend wird die Erfindung anhand von Ausführungsbeispielen unter Bezugnahme auf die beiliegenden Figuren näher erläutert. Dabei zeigen:
- Fig. 1: eine schematische Darstellung einer Analysevorrichtung gemäß der vorliegenden Erfindung gemäß einem ersten Ausführungsbeispiel;
- Fig. 2: eine schematische Darstellung einer Analysevorrichtung gemäß einem zweiten Ausführungsbeispiel;
- Fig. 3: eine schematische Darstellung einer Analysevorrichtung gemäß einem dritten Ausführungsbeispiel;
- Fig. 4: eine schematische Darstellung einer Analysevorrichtung gemäß einem vierten Ausführungsbeispiel;
- Fig. 5: eine schematische Darstellung einer Analysevorrichtung gemäß einem fünften Ausführungsbeispiel;
- Fig. 6: eine schematische Darstellung einer Analysevorrichtung gemäß einem sechsten Ausführungsbeispiel;
- Fig. 7: eine schematische Darstellung einer Analysevorrichtung gemäß einem siebten Ausführungsbeispiel;
- Fig. 8: ein Flussdiagramm zu einem beispielhaften Verfahrensablauf; und
- Fig. 9: alternative Verfahrensschritte zum Verfahren aus Fig. 8.

In einem Biomassetank 1, der ein Gülletank, ein Güllekeller, ein Tank einer Biogasanlage oder dergleichen sein kann, ist flüssige Biomasse 2 aufgenommen. Die flüssige Biomasse 2 ist hier beispielhaft in drei Schichten 4, 6, 8 gezeigt, wobei 4 eine Schwimmschicht und 8 eine Sinkschicht ist. Alle drei Schichten 4, 6, 8 weisen verschiedene Nährstoffgehalte und auch verschiedene Trockensubstanzanteile auf. Neben den drei übereinander angeordneten Schichten 4, 6, 8 können in einem Biomassetank 1 auch eine weitere Anzahl an Schichten, die horizontal übereinander angeordnet sind, als auch vertikal nebeneinander angeordnete Schichten vorhanden sein, die insbesondere aufgrund von mangelnder Rührwerksaktivität oder ungleichmäßiger Zuführung von neuer Biomasse entstehen können.

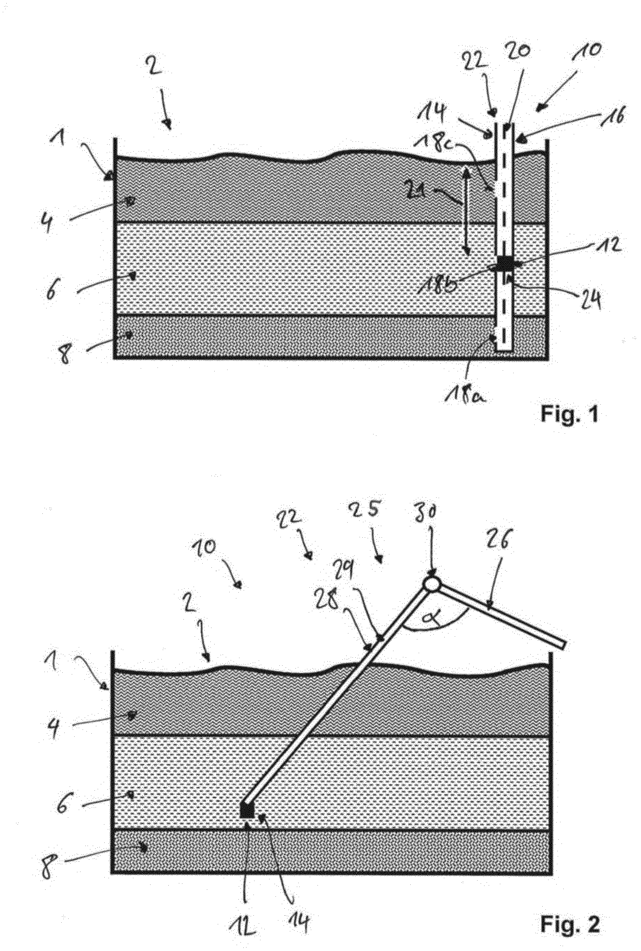

In dem Biomassetank 1 ist gemäß diesem Ausführungsbeispiel eine Analysevorrichtung 10 angeordnet. Die sieben Ausführungsbeispiele der Fig. 1 bis 7 zeigen jeweils denselben Biomassetank 1, wobei sieben verschiedene Ausführungsformen der Analysevorrichtung 10 vorgesehen sind. Dabei werden gleiche und ähnliche Elemente mit gleichen Bezugszeichen versehen und jeweils Bezug auf die vorherige Ausführungsform genommen.

Die Analysevorrichtung 10 gemäß dem ersten Ausführungsbeispiel (Fig. 1) weist eine Tauch-Sensoreinheit 12 zur Erfassung von Daten der Biomasse 2 auf, die in einem Gehäuse 14 angeordnet ist. Das Gehäuse 14 ist gemäß diesem Ausführungsbeispiel durch ein Führungsrohr 16 gebildet, in dessen Innerem die Tauch-Sensoreinheit 12 angeordnet ist. Das Führungsrohr 16 weist einen im Wesentlichen zylindrischen Grundkörper auf, der über drei Sensorfenster 18a, 18b, 18c verfügt, wobei verstanden werden soll, dass ebenso eine größere Anzahl an Sensorfenstern, beispielsweise zehn oder mehr, vorgesehen sein können. Gemäß diesem Ausführungsbeispiel ist das Sensorfenster 18a in der Sinkschicht 8, das Sensorfenster 18b in der mittleren Schicht 6 und das Sensorfenster 18c in der Schwimmschicht 4 angeordnet.

Die Tauch-Sensoreinheit 12 ist verschieblich innerhalb des Führungsrohrs 16 angeordnet und kann mittels einer Einrichtung 20 bezogen auf Fig. 1 vertikal verfahren werden. Die Einrichtung 20 kann ein Seil oder dergleichen umfassen oder andere Triebmittel, wie beispielsweise einen Riemen, eine Teleskopstange, eine elektromagnetisch betriebene Antriebseinheit oder dergleichen. Mittels dieser Einrichtung 20 ist die Tauch-Sensoreinheit 12 auf und ab bewegbar, wie durch den Pfeil 21 angezeigt.

Die Einrichtung 20 dient gleichzeitig als Einrichtung 22 zur Bestimmung der Tauchtiefe der Tauch-Sensoreinheit 12, da mittels der Einrichtung 20 die Position der Tauch-Sensoreinheit 12 in dem Führungsrohr 16 vorgegeben werden kann und die Tauchtiefe dem Führungsrohr 16 in der Biomasse 2 bekannt ist.

Die Analysevorrichtung 10 weist ferner eine Datenübertragungseinrichtung 24 zum Übertragen der erfassten Daten zur Auswertung der Daten auf, die an der Tauch-Sensoreinheit 12 ausgebildet ist und eine Schnittstelle umfasst, sodass die Tauch-Sensoreinheit 12 nach Abschluss der Datenerfassung mit einer stationären externen Analysestation, beispielsweise über USB oder dergleichen, verbindbar ist.

Als wesentlicher Vorteil der Analysevorrichtung gemäß der vorliegenden Erfindung ergibt sich, dass Daten direkt dort in der Biomasse 2 gemessen werden können, wo eine Nährstoffbestimmung erforderlich ist. Es ist nicht erforderlich, die Biomasse 2 mittels einer Tauchflasche oder dergleichen zu beproben oder einer anderen Stechlanze, die anstelle der Sensorfenster 18a, 18b, 18c Öffnungen aufweist, um dort tatsächlich Biomasse 2 zu entnehmen. Auch dies sind bekannte Möglichkeiten, die allerdings den Nachteil mit sich führen, dass die entnommene Biomasse 2 nach Abschluss der Entnahme extern in einer gesonderten Analyse- oder Laborstation analysiert werden muss. Dies bringt den Nachteil mit sich, die entnommene Biomasse zunächst zwischenzulagern, umzufüllen oder zu mischen, um so die Analyse möglich zu machen.

Das Führungsrohr 16 gemäß dem ersten Ausführungsbeispiel (Fig. 1) wird bevorzugt an mehreren lateralen Positionen in dem Biomassetank 1 eingesetzt und die Datenerfassung vorgenommen. Hierdurch kann ein vollständiges Bild der Biomasse 2 im Tank gewonnen werden, und anschließend lässt sich durch die Auswertung der erfassten Daten der durchschnittliche Nährstoffgehalt der Biomasse 2 in dem Biomassetank 1 bestimmen. Ebenso ist es möglich, Trockensubstanzanteile an den entsprechenden Sensorpositionen zu bestimmen.

Ein weiteres Ausführungsbeispiel der Erfindung ist in Fig. 2 gezeigt. Dort ist die Tauch-Sensoreinheit 12 an einem Winkelgestänge 25 befestigt. Das Winkelgestänge 25 weist einen ersten Schenkel 26 und einen zweiten Schenkel 28 auf, die über ein Gelenk 30 miteinander verbunden sind. Zwischen den Schenkeln 26, 28 ist ein Winkel α eingeschlossen. Auf dem Schenkel 28 ist ferner ein Maßstab 29 verkörpert, an dem der Stand der Biomasse 2 ablesbar ist. Durch Kenntnis des Winkels α sowie der Eintauchtiefe des Maßstabs 29 lässt sich die Tauchtiefe der Tauch-Sensoreinheit 12 bestimmen. Folglich wirkt der Maßstab 29 als Einrichtung 22 zur Bestimmung der Tauchtiefe. Der erste Schenkel 26 kann am Rand des Biomassetanks 1 ortsfest angeordnet sein oder mittels einer Einrichtung, beispielsweise einem Traktor oder dergleichen, gehalten werden.

Gemäß diesem Ausführungsbeispiel (Fig. 2) weist die Tauch-Sensoreinheit 12 ein Gehäuse 14 auf, welches die Tauch-Sensoreinheit 12 direkt angibt. Ansonsten ist die Tauch-Sensoreinheit 12 entsprechend dem ersten Ausführungsbeispiel (Fig. 1) gestaltet.

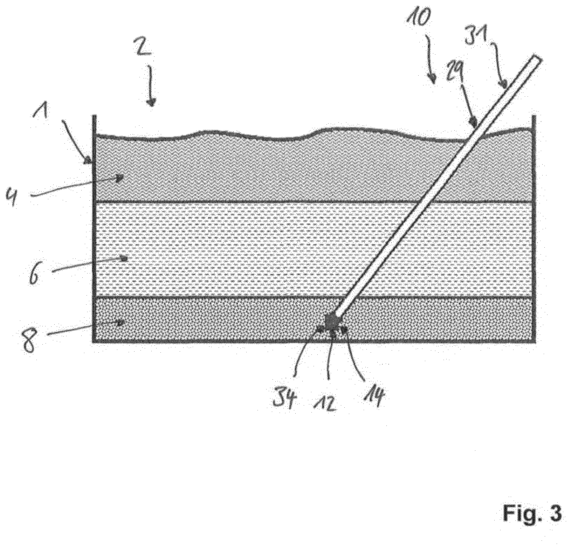

Das Ausführungsbeispiel aus Fig. 3 ist in einigen Punkten ähnlich zu dem Ausführungsbeispiel aus Fig. 2, allerdings ist die Positioniereinrichtung nicht als Winkelgestänge 25 gebildet, sondern weist eine Teleskopstange 31 auf, an der die Tauch-Sensoreinheit 12 samt Gehäuse 14 befestigt ist. Die Teleskopstange 31 ist vorzugsweise handgehalten und wird durch einen Mitarbeiter geführt. Um die Tauchtiefe der Tauch-Sensoreinheit 12 zu bestimmen, weist die Teleskopstange einen Maßstab 29 auf. Alternativ oder zusätzlich kann ein Drucksensor 34 vorgesehen sein, über den ebenfalls die Tauchtiefe bestimmbar ist. Diese Ausführungsform ist besonders einfach und ein Mitarbeiter kann mittels der Teleskopstange 31 die Tauch-Sensoreinheit 12 an die zu untersuchenden Orte in der Biomasse 2 führen.

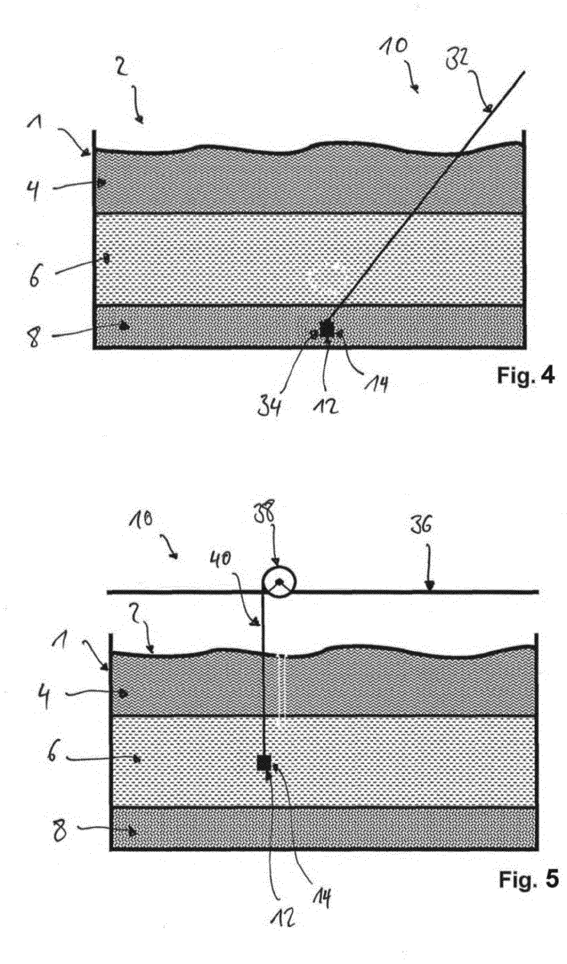

Das Ausführungsbeispiel aus Fig. 4 ist eine Alternative zu dem Ausführungsbeispiel aus Fig. 3, und die Telekopstange 31 ist durch ein Drahtseil 32 ersetzt, an dem die Tauch-Sensoreinheit 12 samt Gehäuse 14 befestigt ist. Die Tauch-Sensoreinheit 12 weist gemäß diesem Ausführungsbeispiel einen Drucksensor 34 auf, mittels dessen die Tauchtiefe bestimmbar ist. Die Tauch-Sensoreinheit 12 wird gemäß diesem Ausführungsbeispiel einfach in die Biomasse 2 geworfen und kann mittels des Drahtseils 32 wieder herausgeholt werden. Durch den Drucksensor 34 kann die Tauchtiefe bestimmt werden, sodass ebenfalls eine Datenerfassung in den Schichten 4, 6, 8 möglich ist.

Fig. 5 illustriert eine weitere Variante der erfindungsgemäßen Analysevorrichtung 10. Gemäß dem Ausführungsbeispiel aus Fig. 4 weist die Positioniereinrichtung eine Traverse 36 auf, die sich quer über den Biomassetank 1 erstreckt. Die Traverse 36 ist seitlich des Biomassetanks 1 auf Rollen gelagert (nicht gezeigt) und kann so über den gesamten Oberflächenbereich der Biomasse 2 verfahren werden. Auf der Traverse 36 ist eine Seilwinde 38 gelagert, die ebenfalls entlang der Traverse 36 (mit Bezug auf Fig. 5 von links nach rechts und umgekehrt) verfahren werden kann. Die Seilwinde 38 spult ein Drahtseil 40 auf und ab, an dessen Ende die Tauch-Sensoreinheit 12 samt Gehäuse 14 befestigt ist. Durch entsprechende Positionierung der Traverse 36 sowie der Seilwinde 38 und durch entsprechendes Ausspulen des Seils 40 lässt sich die Tauch-Sensoreinheit 12 zu einem entsprechenden Sensorort verbringen. Durch diese Art kann in dem kompletten Biomassetank 1 eine Datenerfassung vorgenommen werden und die Tauchtiefe der Tauch-Sensoreinheit 12 lässt sich über das ausgespulte Seil 40 bestimmen. Vorteil dieser Ausführungsform ist, dass auch eine selbsttätige, automatische Datenerfassung möglich ist. Hierzu ist die Seilwinde 38 sowie die Traverse 36 mit einer entsprechenden Steuerung und einem Antrieb versehen, beispielsweise einer SPS-Steuerung, in der ein Datenerfassungs- oder Messplan hinterlegt ist. Dann ist es möglich, dass die Traverse 36 samt Seilwinde 38 selbsttätig einen Messplan abfährt und die Tauch-Sensoreinheit 12 entsprechende Daten erfasst.

Die Tauch-Sensoreinheit 12 ist in diesem Ausführungsbeispiel im Wesentlichen gemäß den Ausführungsbeispielen aus den Fig. 1 bis 2 ausgebildet.

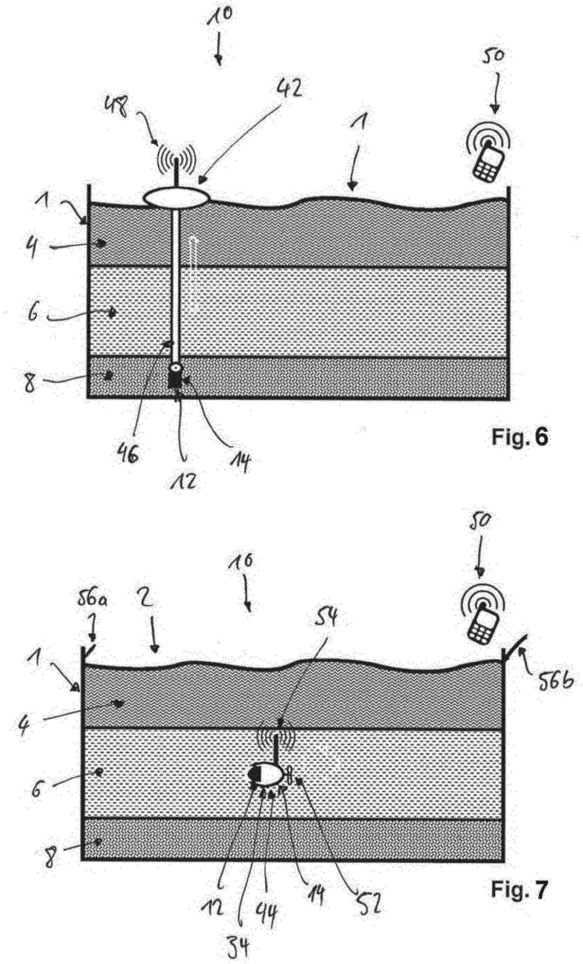

Die Ausführungsbeispiele der Fig. 6 und 7 zeigen Varianten, in denen keine mechanische Positioniereinrichtung vorgesehen ist, mittels derer die Tauch-Sensoreinheit 12 auf mechanische Art und Weise positioniert wird, sondern verwendet jeweils teilautonome Fahrzeuge 42, 44. In Fig. 6 ist das teilautonome Fahrzeug 42 ein Schwimmer 42 und in Fig. 6 ein Tauchboot 44. Der Schwimmer gemäß Fig. 6 ist dazu vorgesehen, auf der Biomasse 2 in dem Biomassetank 1 zu schwimmen. An dem Schwimmer 42 ist gemäß diesem Ausführungsbeispiel eine Teleskopstange 46 vorgesehen, an deren Ende die Tauch-Sensoreinheit 12 samt Gehäuse 14 befestigt ist. Mittels der Teleskopstange 46 lässt sich die Tauch-Sensoreinheit 12 in vertikaler Richtung hin- und herbewegen, sodass die einzelnen Schichten 4, 6, 8 beprobt werden können. Die Teleskopstange 46 kann in einer Variante auch durch eine Seilwinde, wie in Fig. 5 gezeigt ersetzt sein.

Ferner weist der Schwimmer 42 eine Funkeinheit 48 auf, über die dem Schwimmer 42 Stellsignale mittels einer Fernbedienung 50 gesendet werden können. Die Fernbedienung 50 kann beispielsweise als Smartphone mit einer entsprechenden App ausgestaltet sein oder als eine separat dafür vorgesehenen Fernbedienung. Über die Fernbedienung 50 lässt sich sowohl die Tauchtiefe der Tauch-Sensoreinheit 12 als auch die laterale Position des Schwimmers 42 steuern. Zusätzlich ist der Schwimmer 42 teilautonom, das heißt, er kann selbsttätig zu verschiedenen lateralen Positionen verfahren und auch die Tauchtiefe der Tauch-Sensoreinheit 12 selbsttätig einstellen. Die Antenne 48 dient auch zur Datenübertragung der erfassten Daten.

Das Ausführungsbeispiel gemäß Fig. 7 ist dahingehend weiterentwickelt, dass das teilautonome Fahrzeug als Tauchboot 44 ausgebildet ist. Eine Teleskopstange 46 kann dann entfallen. Das Tauchboot 44 bildet das Gehäuse 14 für die Tauch-Sensoreinheit 12, und als Positioniereinrichtung dient ein Tauchboot-Antrieb 52. Wiederum ist eine Fernbedienung 50 vorgesehen, mit der entsprechende Stellsignale an das Tauchboot 44 übertragen werden können, das zu diesem Zweck eine Funkeinheit 54 aufweist. Die Positionsbestimmung des Tauchboots 44 erfolgt dabei einerseits über einen Drucksensor 34 zur Tauchtiefenbestimmung. Andererseits wird die laterale Position des Tauchboots 44 mittels Funk bestimmt. Dazu sind entsprechende Antennen 56a, 56b an dem Biomassetank 1 vorgesehen, mit denen die Funkeinheit 54 kommuniziert. Über Triangulation kann dann die laterale Position des Tauchboots 44 bestimmt werden. Alternativ ist es ebenso möglich, einen GPS-Sensor, ein GNSS-System oder dergleichen vorzusehen.

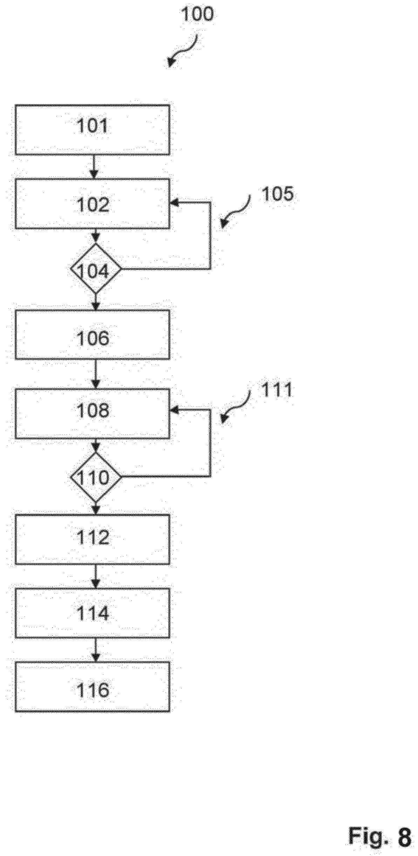

Fig. 8 zeigt dann einen beispielhaften Ablauf eines Verfahrens 100 zur Bestimmung von Eigenschaften von Biomasse 2 in einem Biomassetank 1. Das Verfahren 100 wird insbesondere unter Verwendung einer Analysevorrichtung 10, wie vorstehend beschrieben, ausgeführt.

In Schritt 101 wird eine Tauch-Sensoreinheit 12 in Biomasse 2 in einem Biomassetank 1 an einem ersten vertikalen und lateralen Sensorort positioniert. Anschließend erfolgt Erfassen 102 von Daten der Biomasse 2 an dem ersten Sensorort. In Schritt 104 wird überprüft, ob das Erfassen 102 ausreichend gute Daten geliefert hat oder ob mangelhafte Daten erfasst wurden. Wurden mangelhafte Daten erfasst, wird das Erfassen 102 wiederholt, wie durch den Pfeil 105 angezeigt. Anderenfalls wird zu Schritt 106 übergegangen. Schritt 106 definiert das Positionieren der Tauch-Sensoreinheit 12 in der Biomasse 2 in dem Biomassetank 1 an einem zweiten vertikalen und lateralen Sensorort. Der zweite vertikale und laterale Sensorort ist verschieden von dem ersten Sensorort, und die Tauch-Sensoreinheit 12 muss dazu räumlich bewegt werden. Das Bewegen der Tauch-Sensoreinheit von dem ersten Sensorort zum zweiten Sensorort zum Positionieren 106 erfolgt entweder manuell, teilmanuell, ferngesteuert, semiautonom oder vollautonom.

Anschließend erfolgt nach dem Positionieren 106 ein Erfassen 108 von Daten der Biomasse 2 an dem zweiten Sensorort. Wiederum wird in dem Schritt 110 überprüft, ob das Erfassen 108 mangelhafte Daten erzeugt hat oder ob die Daten ausreichend sind. Sind die Daten mangelhaft, wird, wie durch den Pfeil 111 angezeigt, das Erfassen 108 wiederholt. Anderenfalls wird zu Schritt 112 übergegangen. In dem beispielhaften Ausführungsbeispiel der Fig. 8 wird in Schritt 112 die Tauch-Sensoreinheit 12 aus der Biomasse 2 entnommen. Es soll aber verstanden werden, dass sich nach Schritt 110 weitere Positionierungs- und Erfassungsschritte, entsprechend den Schritten 101 bis 111, anschließen können, um Daten an dritten, vierten, fünften und so weiter Sensororten zu erfassen. Die Anzahl der Sensororte ist abhängig von der Größe des Biomassetanks 1 sowie von einem Datenerfassungs- bzw. Messplan. Weiterhin ist die Anzahl abhängig von der Homogenität der Biomasse und der gewünschten Genauigkeit der Ergebnisse.

Gemäß Fig. 8 wird allerdings in Schritt 112 die Tauch-Sensoreinheit 12 entfernt. In Schritt 114 werden dann die in einer entsprechenden Speichereinheit der Tauch-Sensoreinheit 12 gespeicherten erfassten Daten übertragen an ein externes Analysesystem. Anschließend erfolgt eine Datenauswertung 116, in der die aufgenommenen Daten, insbesondere Spektren, analysiert werden. Durch entsprechende Spektralanalyse und Auswertung ist es möglich, den Nährstoffgehalt, insbesondere Phosphatgehalt und Stickstoffgehalt, der Biomasse 2 zu bestimmen. Insbesondere erfolgt dies über eine Mittelung der erfassten Werte.

Auch wenn in dem Ausführungsbeispiel gemäß Fig. 8 nach dem Erfassen 102, 108 stets eine Überprüfung 104, 110 stattfindet, soll verstanden werden, dass dies nicht zwingend erforderlich ist für die vorliegende Erfindung. Es wird ebenso möglich, die Schritte 104, 110 nicht auszuüben, sondern lediglich die Daten zu erfassen.

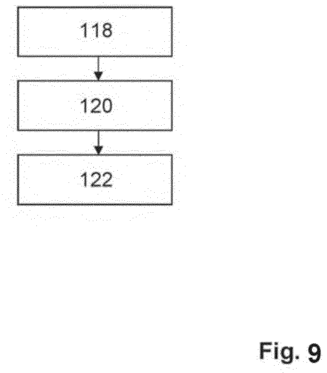

Weitere Schritte, die das Verfahren 100 umfassen können, sind in Fig. 9 schematisch dargestellt. Die Schritte 118 bis 122 schließen sich vorzugsweise an den Schritt 110 an oder an den Schritt 104, oder werden anstelle der Schritte 102 bis 110 ausgeführt. Gemäß diesem Ausführungsbeispiel (Fig. 9) wird in Schritt 118 an einer der Sensorpositionen der Trockensubstanzgehalt bestimmt. Basierend auf dem Trockensubstanzgehalt wird anschließend in Schritt 120 die Homogenität der Biomasse 2 in Biomassetank 1 bestimmt, insbesondere berechnet. Basierend auf der Homogenität der Biomasse 2 erfolgt in Schritt 122 eine Anpassung der Rührwerksaktivität. Es hat sich gezeigt, dass es bevorzugt ist, das Rührwerk in dem Biomassetank 1 möglichst bedarfsorientiert einzusetzen. Wird ein Rührwerk eingesetzt, welches permanent die Biomasse 2 homogenisiert, kann es dazu kommen, dass die Rührwerksaktivität zu hoch ist und verringert werden kann, um dieselbe Homogenität aufrechtzuerhalten. Hierdurch kann ein erhebliches Maß an Energie eingespart werden. Andererseits kann durch Bestimmung der Homogenität auch festgestellt werden, ob die Rührwerksaktivität zu gering ist oder nur örtlich zu gering ist. Wird dies festgestellt, wird entsprechend die Rührwerksaktivität in Schritt 122 angepasst, um die Homogenität der Biomasse 2 zu erhöhen bzw. aufrechtzuerhalten.

## Patentansprüche

1. Analysevorrichtung (10) zur Bestimmung von Eigenschaften von Biomasse (2) in einem Biomasse-Tank (1), mit:
- einer Tauch-Sensoreinheit (12) zur Erfassung von Daten der Biomasse (2);
- einem Gehäuse (14), das die Tauch-Sensoreinheit (12) fluiddicht einhaust, sodass die Tauch-Sensoreinheit (12) in die Biomasse (2) eintauchbar ist;
- einer mit der Tauch-Sensoreinheit (12) verbundenen mechanischen Positioniereinrichtung zum mechanisch getriebenen vertikalen und lateralen Positionieren der Tauch-Sensoreinheit (12) an einem Sensorort innerhalb eines Biomasse-Tanks (1);
- einer Einrichtung (22) zur Bestimmung der Tauchtiefe der Tauch-Sensoreinheit (12); und
- einer Datenübertragungseinrichtung (24) zum Übertragen der erfassten Daten zur Auswertung der Daten,
wobei die Tauch-Sensoreinheit (12) einen Spektroskopie-Sensor, insbesondere einen IR-Spektroskopie-Sensor, einen NIRS-Sensor oder einen MIRS-Sensor, oder einen NMR-Sensor aufweist.

2. Analysevorrichtung nach Anspruch 1,
wobei die Positioniereinrichtung mechanisch ausgebildet ist, und die Tauch-Sensoreinheit (12) mechanisch getrieben an den Sensorort verbringbar ist, wobei die Positioniereinrichtung ein Führungsrohr (16) aufweist, wobei die Tauch-Sensoreinheit (12) in dem Führungsrohr (16) angeordnet ist, vorzugsweise verfahrbar in dem Führungsrohr (16) angeordnet ist.

3. Analysevorrichtung nach Anspruch 2, wobei das Führungsrohr (16) wenigstens ein Sensorfenster (18a, 18b, 18c) für die die Tauch-Sensoreinheit (12) aufweist.

4. Analysevorrichtung nach Anspruch 1, wobei die Positioniereinrichtung mechanisch ausgebildet ist, und die Tauch-Sensoreinheit (12) mechanisch getrieben an den Sensorort verbringbar ist, wobei die Positioniereinrichtung ein mechanisches Winkelgestänge (25) aufweist.

5. Analysevorrichtung nach Anspruch 1, wobei die Positioniereinrichtung mechanisch ausgebildet ist, und die Tauch-Sensoreinheit (12) mechanisch getrieben an den Sensorort verbringbar ist, wobei die Positioniereinrichtung ein mittels einer Seilwinde (38) antreibbares Seil (40) aufweist, wobei die Seilwinde (38) vorzugsweise mittels einer Traverse (36) lateral in dem Tank (1), vorzugsweise oberhalb des Füllstands, positionierbar ist.

6. Analysevorrichtung nach einem der vorstehenden Ansprüche, wobei die Positioniereinrichtung ein ferngesteuertes und/oder autonomes Fahrzeug (42, 44) aufweist, welches vorzugsweise ein Schwimmer (42), vorzugsweise Tauchboot (44) ist, der dazu vorgesehen ist, auf der Biomasse (2) zu schwimmen, wobei die Tauch-Sensoreinheit (12) mittels eines Seils oder einer Teleskopstange (46) an dem Schwimmer (42) angeordnet ist.

7. Analysevorrichtung nach einem der vorstehenden Ansprüche, wobei die Einrichtung (22) zur Bestimmung der Tauchtiefe der Tauch-Sensoreinheit einen Drucksensor (34) umfasst.

8. Analysevorrichtung nach einem der vorstehenden Ansprüche, wobei Datenübertragungseinrichtung eine Speichereinheit zum Zwischenspeichern der erfassten Daten aufweist.

9. Analysevorrichtung nach einem der vorstehenden Ansprüche, wobei die erfassten Daten einen Nährstoffgehalt und/oder einen Trockensubstanzanteil der Biomasse (2) umfassen.

10. Verfahren (100) zur Bestimmung von Eigenschaften von Biomasse (2) in einem Biomasse-Tank (1), insbesondere unter Verwendung einer Analysevorrichtung (10) nach einem der Ansprüche 1 bis 9, umfassend die Schritte:
- mechanisch getriebenes Positionieren (101) einer Tauch-Sensoreinheit (12) in Biomasse (2) in einem Biomasse-Tank (1) an einem ersten vertikalen und lateralen Sensorort;
- Erfassen (102) von Daten der Biomasse (2) an dem ersten Sensorort;
- mechanisch getriebenes Positionieren (106) der Tauch-Sensoreinheit (12) in Biomasse (2) in dem Biomasse-Tank (1) an einem zweiten vertikalen und lateralen Sensorort; und
- Erfassen (108) von Daten der Biomasse (2) an dem zweiten Sensorort.

11. Verfahren nach Anspruch 10, wobei wenigstens das Positionieren (106) der Tauch-Sensoreinheit (12) in Biomasse (2) in dem Biomasse-Tank (1) an dem zweiten vertikalen und lateralen Sensorort selbststätig erfolgt.

12. Verfahren nach Anspruch 10 oder 11, umfassend den Schritt:
- Übertragen (114) der erfassten Daten, teilweise oder vollständig während der Erfassung (102, 108) und/oder dem Positionieren (101, 106) oder nach Abschluss des Erfassens, an eine externe Analysestation zur Auswertung der erfassten Daten; und vorzugsweise
- Berechnen (116) eines approximierten Nährstoffgehalts des Biomasse-Tanks (1).

13. Verfahren nach einem der Ansprüche 10 bis 12, umfassend die Schritte:
- Bestimmen (104, 110), dass das Erfassen (102, 108) an einem der ersten und zweiten Sensororte mangelhafte Daten erzeugt hat; und
- Wiederholen (105, 111) des Erfassens (102, 108) an dem entsprechenden ersten oder zweiten Sensorort.

14. Verfahren nach einem der Ansprüche 10 bis 13, umfassend den Schritt:
- Bestimmen (118) eines Trockensubstanzanteils an den ersten und zweiten Sensororten; vorzugsweise umfassend den Schritt:
- Berechnen (120) einer Homogenität der Biomasse (2) basierend auf den Trockensubstanzanteilen an den ersten und zweiten Sensororten; weiter vorzugsweise umfassend den Schritt:
- Anpassen (122) einer Rührwerkaktivität basierend auf der Homogenität der Biomasse (2).

## Claims

1. An analysis device (10) for determining properties of biomass (2) in a biomass tank (1), having:
- an immersion sensor unit (12) for capturing data of the biomass (2);
- a housing (14) encasing the immersion sensor unit (12) in a fluid-tight manner, so that the immersion sensor unit (12) can be immersed in the biomass (2);
- a mechanical positioning device connected to the immersion sensor unit (12) for mechanically driven vertical and lateral positioning of the immersion sensor until (12) at a sensor location within a biomass tank (1);
- a device (22) for determining the immersion depth of the immersion sensor unit (12); and
- a data transfer device (24) for transferring the captured data for evaluating the data,
wherein the immersion sensor unit (12) comprises a spectroscopy sensor, particularly an IR spectroscopy sensor, an NIRS sensor or an MIRS sensor, or an NMR sensor.

2. The analysis device according to claim 1,
the positioning device being mechanically implemented and the immersion sensor unit (12) being transportable to the sensor location by means of a mechanical drive, wherein the positioning device comprises a guide tube (16), wherein the immersion sensor unit (12) is disposed in the guide tube (16), preferably transportably disposed in the guide tube (16).

3. The analysis device according to claim 2, wherein the guide tube (16) comprises at least one sensor window (18a, 18b, 18c) for the immersion sensor unit (12).

4. The analysis device according to claim 1, the positioning device being mechanically implemented and the immersion sensor unit (12) being transportable to the sensor location by means of a mechanical drive, wherein the positioning device comprises a mechanical angle linkage (25).

5. The analysis device according to claim 1, the positioning device being mechanically implemented and the immersion sensor unit (12) being transportable to the sensor location by means of a mechanical drive, wherein the positioning device comprises a cable (40) driven by means of a cable winch (38), wherein the cable winch (38) preferably can be positioned laterally in the tank (1), preferably above the fill level, by means of a cross beam (36).

6. The analysis device according to any one of the preceding claims, wherein the positioning device comprises a remote-controlled and/or autonomous vehicle (42, 44), preferably a float (42), preferably a submersible (44), provided for floating on the biomass (2), wherein the immersion sensor unit (12) is disposed on the float (42) by means of a cable or a telescoping rod (46).

7. The analysis device according to any one of the preceding claims, wherein the device (22) for determining the immersion depth of the immersion sensor unit comprises a pressure sensor (34).

8. The analysis device according to any one of the preceding claims, wherein the data transfer device comprises a memory unit for temporarily storing the captured data.

9. The analysis device according to any one of the preceding claims, wherein the captured data comprise a nutrient content and/or a dry matter content of the biomass (2).

10. A method (100) for determining properties of biomass (2) in a biomass tank (1), particularly using an analysis device (10) according to any one of the claims 1 through 9, comprising the steps:
- mechanically driven positioning (101) of an immersion sensor unit (12) in the biomass (2) in a biomass tank (1) at a first vertical and lateral sensor location;
- capturing (102) data of the biomass (2) at the first sensor location;
- mechanically driven positioning (106) of the immersion sensor unit (12) in the biomass (2) in the biomass tank (1) at a second vertical and lateral sensor location; and
- capturing (108) data of the biomass (2) at the second sensor location.

11. The method according to claim 10, wherein at least the positioning (106) of the immersion sensor unit (12) in the biomass (2) in the biomass tank (1) at a second vertical and lateral sensor location takes place autonomously.

12. The method according to claim 10 or 11, comprising the step:
- transferring (114) the captured data, partially or completely during the capturing (102, 108) and/or the positioning (101, 106) or after completing the capturing, to an external analysis station for evaluating the captured data; and preferably
- calculating (116) an approximate nutrient content of the biomass tank (1).

13. The method according to any one of the claims 10 through 12, comprising the steps:
- determining (104, 110) that the capturing (102, 108) at one of the first and second sensor locations produced defective data; and
- repeating (105, 111) the capturing (102, 108) at the corresponding first or second sensor location.

14. The method according to any one of the claims 10 through 13, comprising the step:
- determining (118) a dry matter content at the first and second sensor locations; preferably comprising the step:
- calculating (120) a homogeneity of the biomass (2) based on the dry matter contents at the first and second sensor locations; preferably further comprising the step:
- adapting (122) an agitator activity based on the homogeneity of the biomass (2).

## Revendications

1. Dispositif d'analyse (10) pour déterminer des propriétés de la biomasse (2) dans un réservoir (1) de biomasse, comportant:
- une unité de capteur immergée (12) pour l'acquisition de données de la biomasse (2);
- un boîtier (14) qui renferme l'unité de capteur immergée (12) de manière étanche aux fluides, de sorte que l'unité de capteur immergée (12) peut être immergée dans la biomasse (2);
- un dispositif de positionnement mécanique relié à l'unité de capteur immergée (12) pour le positionnement vertical et latéral à commande mécanique de l'unité de capteur immergée (12) à un emplacement de capteur à l'intérieur d'un réservoir (1) de biomasse;
- un dispositif (22) pour déterminer la profondeur d'immersion de l'unité de capteur immergée (12); et
- un dispositif de transmission (24) de données pour la transmission des données acquises en vue de l'évaluation des données,
l'unité de capteur immergée (12) présentant un capteur de spectroscopie, en particulier un capteur de spectroscopie IR, un capteur SPIR, un capteur MIR ou un capteur RMN.

2. Dispositif d'analyse selon la revendication 1,
le dispositif de positionnement étant réalisé mécaniquement, et l'unité de capteur immergée (12) pouvant être déplacée à l'emplacement de capteur par entraînement mécanique, le dispositif de positionnement présentant un tube de guidage (16), l'unité de capteur immergée (12) étant disposée dans le tube de guidage (16), de préférence de manière déplaçable dans le tube de guidage (16).

3. Dispositif d'analyse selon la revendication 2, dans lequel le tube de guidage (16) comprend au moins un hublot (18a, 18b, 18c) de capteur pour l'unité de capteur immergée (12).

4. Dispositif d'analyse selon la revendication 1, dans lequel le dispositif de positionnement est réalisé mécaniquement, et l'unité de capteur immergée (12) peut être déplacée à l'emplacement de capteur par entraînement mécanique, le dispositif de positionnement présentant une tringlerie en coude (25) mécanique.

5. Dispositif d'analyse selon la revendication 1, dans lequel le dispositif de positionnement est réalisé mécaniquement, et l'unité de capteur immergée (12) peut être déplacée à l'emplacement de capteur par entraînement mécanique, le dispositif de positionnement présentant un câble (40) pouvant être entraîné au moyen d'un treuil à câble (38), le treuil à câble (38) pouvant être positionné latéralement dans le réservoir (1), de préférence au moyen d'une traverse (36), de préférence au-dessus du niveau de remplissage.

6. Dispositif d'analyse selon l'une quelconque des revendications précédentes, dans lequel le dispositif de positionnement comprend un véhicule (42, 44) télécommandé et/ou autonome, qui est de préférence un flotteur (42), de préférence un submersible (44), qui est prévu pour flotter sur la biomasse (2), l'unité de capteur immergée (12) étant disposée sur le flotteur (42) au moyen d'un câble ou d'une tige télescopique (46).

7. Dispositif d'analyse selon l'une quelconque des revendications précédentes, dans lequel le dispositif (22) pour déterminer la profondeur d'immersion de l'unité de capteur immergée comporte un capteur de pression (34).

8. Dispositif d'analyse selon l'une quelconque des revendications précédentes, dans lequel le dispositif de transmission de données comprend une unité de mémoire pour stocker temporairement les données acquises.

9. Dispositif d'analyse selon l'une quelconque des revendications précédentes, dans lequel les données acquises comprennent une teneur en nutriments et/ou une part de matière sèche de la biomasse (2).

10. Procédé (100) pour déterminer des propriétés de la biomasse (2) dans un réservoir (1) de biomasse, en particulier par utilisation d'un dispositif d'analyse (10) selon l'une quelconque des revendications 1 à 9, comprenant les étapes suivantes:
- positionnement (101) par entraînement mécanique d'une unité de capteur immergée (12) dans de la biomasse (2) dans un réservoir (1) de biomasse à un premier emplacement de capteur vertical et latéral;
- acquisition (102) de données de la biomasse (2) au premier emplacement de capteur;
- positionnement (106) par entraînement mécanique de l'unité de capteur immergée (12) dans de la biomasse (2) dans le réservoir (1) de biomasse à un deuxième emplacement de capteur vertical et latéral; et
- acquisition (108) de données de la biomasse (2) au deuxième emplacement de capteur.

11. Procédé selon la revendication 10, dans lequel au moins le positionnement (106) de l'unité de capteur immergée (12) dans la biomasse (2) dans le réservoir (1) de biomasse au deuxième emplacement de capteur vertical et latéral s'effectue automatiquement.

12. Procédé selon la revendication 10 ou 11, comprenant l'étape suivante:
- transmettre (114) les données acquises, en partie ou en totalité pendant l'acquisition (102, 108) et/ou le positionnement (101, 106) ou après la fin de l'acquisition, à une station d'analyse externe en vue de l'évaluation des données acquises; et de préférence
- calculer (116) une teneur en nutriments approximée du réservoir (1) de biomasse.

13. Procédé selon l'une quelconque des revendications 10 à 12, comprenant les étapes suivantes:
- déterminer (104, 110) que l'acquisition (102, 108) à l'un du premier et du deuxième emplacements de capteur a généré des données défectueuses; et
- répéter (105, 111) l'acquisition (102, 108) au niveau du premier ou du deuxième emplacement de capteur correspondant.

14. Procédé selon l'une quelconque des revendications 10 à 13, comprenant l'étape suivante:
- déterminer (118) une part de matière sèche aux premier et deuxième emplacements de capteur; comprenant de préférence l'étape suivante:
- calculer (120) une homogénéité de la biomasse (2) sur la base des parts de matière sèche aux premier et deuxième emplacements de capteur; comprenant en outre de préférence l'étape suivantes:
- adapter (122) une activité de mélangeur-agitateur sur la base de l'homogénéité de la biomasse (2).
